Europäisches Patentamt

European Patent Office

Office européen des brevets

(19)

(11) Numéro de publication: **0 045 232**
**B1**

# FASCICULE DE BREVET EUROPEEN

(12)

(45) Date de publication du fascicule du brevet:
06.06.84

(51) Int. Cl.³: **B 60 T 11/20**

(21) Numéro de dépôt: **81401096.3**

(22) Date de dépôt: **08.07.81**

(54) **Maître-cylindre à encombrement réduit.**

(30) Priorité: **30.07.80 ES 494697**

(43) Date de publication de la demande:
**03.02.82 Bulletin 82/5**

(45) Mention de la délivrance du brevet:
**06.06.84 Bulletin 84/23**

(84) Etats contractants désignés:
**DE FR GB**

(56) Documents cités:
**DE - A - 1 243 539**
**DE - A - 2 738 742**
**FR - A - 2 361 258**

(73) Titulaire: **BENDIBERICA S.A., Balmès 243,
Barcelona 6 (ES)**

(72) Inventeur: **Bacardit, Juan Simon, C/Mallorca 451, 6 4a A,
Barcelona 13 (ES)**
Inventeur: **Coll, Juan Villaronga, C/Escuelas 50, La
Llagorsta (Barcelona) (ES)**
Inventeur: **Bofill, Joaquim Ferret, C/Mallorca 93, 5 3a,
Barcelona 29 (ES)**

(74) Mandataire: **Le Moenner, Gabriel et al, SERVICE
BREVETS BENDIX 44, Rue François 1er, F-75008 Paris
(FR)**

BUNDESDRUCKEREI BERLIN

# Description

L'invention concerne principalement un maître-cylindre d'encombrement réduit et plus particulièrement un maître-cylindre court.

On sait que dans les installations de freins hydrauliques pour les véhicules dotés de circuits de freins indépendants, on utilise des maîtres-cylindres comprenant un piston primaire et un piston secondaire coulissant hermétiquement à l'intérieur d'un logement cylindrique, en formant deux enceintes de pression communiquant respectivement avec deux circuits de freins et deux réservoirs d'alimentation de fluide hydraulique. Ces dernières communications s'effectuent généralement à travers deux passages de compensation ou de dilatation qui sont maintenus ouverts dans la position de repos du cylindre, mais qui sont fermés par les pistons aussitôt que ces derniers commencent leur course de freinage.

Il est évident que la communication des enceintes de pression, qui sont situées entre deux pistons, avec les circuits de freins respectifs doit être réalisée à travers des orifices traversant la paroi latérale du cylindre creux, précisément entre les deux pistons qui limitent l'enceinte. Conformément à cela, il faut prévoir, une distance adéquate entre la sortie de l'enceinte de pression primaire et les pistons afin que la sortie ne puisse être obturée ni par le piston secondaire, ni par le piston primaire dans l'une quelconque des positions de leur parcours. Cette distance de parcours constitue, comme on le sait, une limitation importante dans la conception des maîtres-cylindres les plus courts possibles. Or, le besoin de maîtres-cylindres courts se fait de plus en plus sentir dans l'industrie automobile.

La présente invention permet de résoudre ce problème en introduisant dans les maîtres-cylin-dres du type précédemment décrit des perfec-tionements permettant de réduire d'une manière appréciable, la longueur constructive des cylindres en question.

Dans ce but, l'invention concerne un maître-cylindre de freinage, du type comprenant, coulissant hermétiquement à l'intérieur d'un alésage d'un corps, un piston primaire et un piston secondaire distants axialement l'un de l'autre et définissant entre eux une enceinte de pression primaire reliée en permanence à un circuit de frein primaire par un orifice débouchant dans la paroi latérale de l'alésage, le piston secondaire définissant avec le fond de l'alésage une enceinte de pression secondaire reliée en permanence à un circuit de frein secondaire par un orifice débouchant dans la pario de l'alésage, les enceintes de pression communiquant respectivement, lorsque les pistons sont en une position extrême de repos, avec deux réservoirs d'alimentation à travers des passages d'alimentation et de compensation ou dilatation débouchant dans l'alésage, caractérisé en ce que les pistons possèdent des surfaces latérales lasses coopérant en coulissement étanche avec des paires respectives de coupelles élastiques disposées dans des rainures annulaires de la paroi latérale de l'alésage, et en ce que, dans au moins l'une des deux positions extrêmes des pistons, l'orifice reliant l'enceinte de pression primaire au circuit de frein primaire est situé en regard de la surface latérale de l'un des pistons et communique avec l'enceinte de pression primaire par l'intermédiaire de rainures longitudinales formées dans la surface latérale de l'alésage.

Selon un aspect de l'invention, au moins un des passages d'alimentation est couvert par la surface latérale du piston correspondant, le passage de compensation ou dilatation associé comprenant des portions axiales desdites rainures longitudinales communiquant avec le passage d'alimentation. Plus spécifiquement, l'extrémité avant du piston, délimitant l'enceinte de pression correspondante, comporte des rainures ou chanfreins périphériques, les portions de compensation ou dilatation des rainures longitudinales étant délimitées vers cette enceinte de pression par une coupelle de ladite paire de coupelles élastiques coopérant avec ledit piston, la face interne de cette coupelle étant située à l'aplomb, dans la position de repos du piston, desdites rainures ou chanfreins.

Les dessins ci-joints montrent à titre d'exemple non limitatif de la portée de la présente invention et dans des représentations schématiques un mode de réalisation préféré d'un maître-cylindre conforme à l'invention. Sur ces dessins

la fig. 1 est une section axiale d'un maître-cylindre muni des perfectionnements de l'invention pour deux circuits de freins indépendants, dessiné dans sa position de repos, et

la fig. 2 est une section transversale du cylindre de la figure précédente selon la ligne II-II de celle-ci.

Sur les figures, le maître-cylindre comprend un corps 1 dans lequel on a formé un alésage cylindrique borgne 2, à l'intérieur duquel coulissent hermétiquement un piston primaire 3 et un piston secondaire 4.

Entre le fond de l'alésage 2 et une cavité axiale de la face avant du piston secondaire 4, considérée dans le sens de l'avance de celui-ci, se trouve logé un ressort de compression hélicoïdal 5, et entre deux cavités situées dans les deux pistons, axialement et face à face, se trouve un ressort hélicoïdal de compression 6. Les deux ressorts sont dimensionnés de telle manière qu'ils tendent à maintenir les deux pistons dans la position de repos représentée, contre une rondelle de retenue 7, soutenue au moyen d'un anneau élastique 8, disposés à l'entrée du cylindre. Du piston primaire 3, dépasse frontalement un boulon axial 9 dont la tête 10 est accrochée derrière une collerette terminale 11, formée à l'extrémité d'un manchon 12 dont l'extrémité opposée possède une collerette extérieure 13 qui est repoussée par le ressort 6. Ce dispositif est prévu pour assurer le retour du piston secondaire 4 à la position de repos représentée dans le cas où des résistances fonctionnelles se manifesteraient. Le piston primaire peut être actionné à l'aide de moyens conventionnels comme par exemple une tige de pédale agissant dans le siège de rotule 14 de son extrémité extérieure.

Ainsi qu'on peut le constater, une enceinte de pression primaire 15 est définie entre les deux pistons 3 et 4 et une enceinte de pression secondaire 16 est définie entre le piston 4 et le fond du cylindre 2. Ces enceintes sont alimentées par le fluide des freins hydrauliques à travers les orifices 17 et 18 et les conduites 19 et 20, à partir des réservoirs indépendants 21 et 22. Chacun des orifices 17 et 18 débouche dans le cylindre à travers une rainure annulaire 23 et 24 et chaque rainure est bordée de chaque côté par une paire de coupelles de joint élastique 15 et 26 s'ajustant hermétiquement sur la surface latérale des pistons. D'autre part, les extrémités avant des deux pistons, possèdent une série de rainures ou de chanfreins 27 et leur disposition est telle que, dans chaque cas, ces rainures ou ces chanfreins font communiquer les rainures d'entrée 23 et 24 avec les enceintes de pression, lorsque les éléments du maître-cylindre se trouvent dans la position de repos représentée; cependant cette communication s'interrompt par l'ajustement des coupelles 26 avec la surface latérale des pistons respectifs à partir du moment où ces derniers amorcent leur course de freinage. Cette particularité apparaît clairement sur les figures.

Chacune des enceintes de pression 15 et 16 communique avec les circuits de freinage respectifs schématisés par les flèches 28 et 29, à travers les orifices 30 et 31.

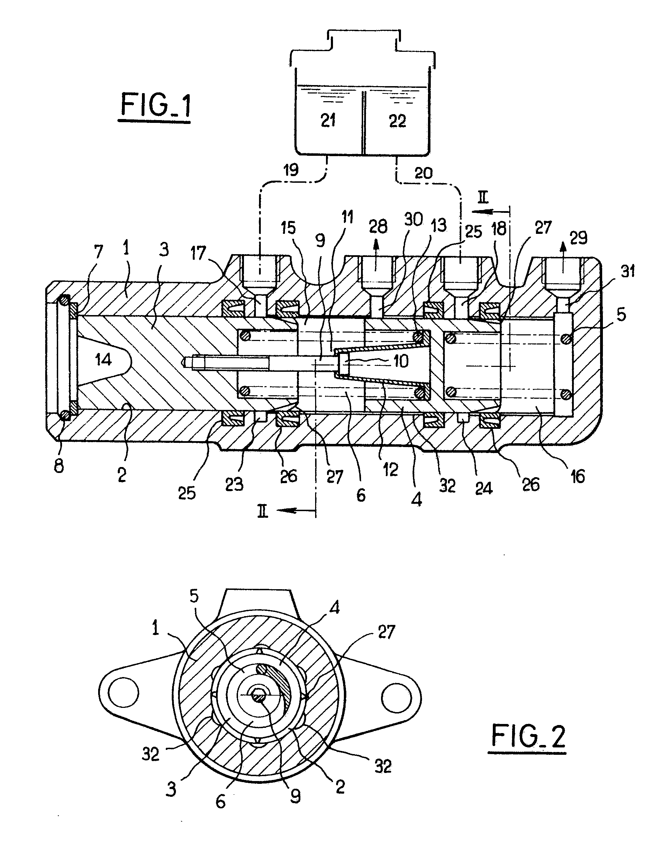

Ainsi qu'on peut le constater à la fig. 1, l'orifice 30 serait obturé par le piston secondaire 4 ou par le piston primaire 3 à partir d'un point déterminé de sa course dans les constructions habituelles; cependant, conformément à l'invention, cette obturation est évitée par le fait que la surface de l'alésage 2, possède une série de rainures longitudinales 32 communiquant avec l'orifice 30, de telle manière qu'elles maintiennent cette communication bien que l'un ou l'autre des pistons soit face à cet orifice. Ces rainures 32 s'étendent par exemple entre les deux coupelles 25 et 26 en regard et appartenant à des paires différentes.

Il est évident qu'en absence des rainures longitudinales 32, le cylindre représenté devrait être allongé d'une distance formée d'une part par la distance dont le piston secondaire recouvre l'orifice 30 et d'autre part, par la distance dont le piston primaire 3 le recouvrirait lorsque les deux pistons atteignent la fin de leurs parcours additionnés. Ces recouvrements additionnés constitueraient par conséquent l'excédent de longueur qu'un maître-cylindre conventionnel possèderait par rapport au maître-cylindre représenté pour travailler dans les mêmes conditions.

Enfin, il est à noter que les rainures longitudinales 32 peuvent se prolonger jusqu'à communiquer avec l'orifice 17 et la rainure annulaire 23 formant ainsi une partie du passage de compensation ou de dilatation (23, 27, 32) de l'enceinte primaire 15. Le même agencement est possible pour définir le passage de compensation ou de dilatation de l'enceinte secondaire 16.

## Revendications

1. Maître-cylindre de freinage, comprenant, coulissant hermétiquement à l'intérieur d'un alésage (2) d'un corps (1), un piston primaire (3) et un piston secondaire (4) distants axialement l'un de l'autre et définissant entre eux une enceinte de pression primaire (15) reliée en permanence à un circuit de frein primaire (28) par un orifice (30) débouchant dans la paroi latérale de l'alésage (2), le piston secondaire (4) définissant avec le fond de l'alésage une enceinte de pression secondaire (16) reliée en permanence à un circuit de frein secondaire (29) par un orifice (31) débouchant dans la paroi de l'alésage (2), les enceintes de pression (15, 16) communiquant respectivement, lorsque les pistons (3, 4) sont en une position extrême de repos, avec deux réservoirs d'alimentation (21, 22) à travers des passages d'alimentation (17, 18) et de compensation ou dilatation (23, 24, 27) débouchant dans l'alésage (2), caractérisé en ce que les pistons (3, 4) possèdent des surfaces latérales lisses coopérant en coulissement étanche avec des paires respectives de coupelles élastiques (25, 26) disposées dans des rainures annulaires de la paroi latérale de l'alésage (2), et en ce que, dans au moins l'une des deux positions extrêmes des pistons (3, 4), l'orifice (30) reliant l'enceinte de pression primaire au circuit de frein primaire est situé en regard de la surface latérerale de l'un des pistons et communique avec l'einceinte de pression primaire (15) par l'intermédiaire de rainures longitudinales (32) formées dans la surface latérale de l'alésage (2).

2. Maître-cylindre selon la revendication 1, caractérisé en ce qu'au moins un des passages d'alimentation (17; 18) est couvert par la surface latérale du piston correspondant (2, 4), le passage de compensation ou dilatation associé (23, 24, 27) comprenant des portions axiales desdites rainures longitudinales (32) communiquant avec le passage d'alimentation (17).

3. Maître-cylindre selon la revendication 2, caractérisé en ce que l'extrémité avant du piston (2, 4), délimitant l'enceinte de pression correspondante (15, 16), comporte des rainures ou chanfreins périphériques (27), les portions de compensation ou dilatation des rainures longitudinales (32) étant délimitées vers cette enceinte de pression par une coupelle de ladite paire de coupelles élastiques (25, 26) coopérant avec ledit piston, la face interne de cette coupelle étant située à l'aplomb, dans la position de repos du piston, desdites rainures ou chanfreins (27).

**Patentansprüche**

1. Hauptbremszylinder mit einem Primärkolben (3) und einem Sekundärkolben (4), die im Inneren einer Bohrung (2) eines Gehäuses (1) hermetisch gleiten, axial voneinander beabstandet sind und zwischen sich einen Primärdruckraum (15) bilden, der dauernd an einem Primärbremskreis (28) durch eine Öffnung (30) angeschlossen ist, die in der Seitenwand der Bohrung (2) mündet, wobei der Sekundärkolben (4) mit dem Boden der Bohrung einen Sekundärdruckraum (16) bildet, der dauernd an einem Sekundärbremskreis (29) durch eine Öffnung (31) angeschlossen ist, die in der Seitenwand der Bohrung (2) mündet, wobei die Druckräume (15, 16) in einer Ruheendstellung der Kolben (3, 4) mit zwei Versorgungsbehältern (21, 22) über Versorgungskanäle (17, 18) und Ausgleichskanäle (23, 24, 27), die in der Bohrung (2) münden, verbunden sind, dadurch gekennzeichnet, daß die Kolben (3, 4) glatte Seitenflächen besitzen, die abgedichtet gleitend mit entsprechenden Paaren elastischer Dichtungen (25, 26) zusammenwirken, die in Ringnuten der Seitenwand der Bohrung (2) angeordnet sind, und daß in mindestens einer der beiden Endstellungen der Kolben (3, 4) die Öffnung (30), die den Primärdruckraum mit dem Primärbremskreis verbindet, gegenüber der Seitenfläche eines der Kolben angeordnet ist und mit dem Primärdruckraum (15) über in der Seitenwand der Bohrung (2) gebildete Längsnuten (32) in Verbindung steht.

2. Hauptbremszylinder nach Anspruch 1, dadurch gekennzeichnet, daß mindestens einer der Versorgungskanäle (17; 18) durch die Seitenwand des entsprechenden Kolbens (2, 4) abgedeckt ist, wobei der zugehörige Ausgleichskanal (23, 24, 27) axiale Abschnitte der Längsnuten (32) umfaßt, die mit dem Versorgungskanal (10) verbunden sind.

3. Hauptbremszylinder nach Anspruch 2, dadurch gekennzeichnet, daß das vordere Ende des Kolbens (2, 4), das den entsprechenden Druckraum (15, 16) begrenzt, Umfangsnuten bzw. -fasen (27) aufweist, wobei die Ausgleichsabschnitte der Längsnuten (32) in Richtung auf diesen Druckraum durch eine mit dem Kolben zusammenwirkende Dichtung des besagten Dichtungspaares (25, 26) begrenzt sind und die Innenfläche dieser Dichtung in der Ruhestellung des Kolbens an der Stelle der Umfangsnuten bzw. -fasen (27) angeordnet ist.

**Claims**

1. A master brake cylinder comprising a primary piston (3) and a secondary piston (4) hermetically sliding within a bore (2) of a body (1), the pistons being axially spaced from each other and defining between them a primary pressure chamber (15) permanently connected to a primary brake circuit (28) by an orifice (30) opening into the lateral wall of the bore (2), the secondary piston (4) defining with the base of the bore a secondary pressure chamber (16) permanently connected to a secondary brake circuit (29) by an orifice (31) opening into the wall of the bore (2), the pressure chambers (15, 16) communicating, respectively, when the pistons (3, 4) are in an extreme rest position, with a pair of supply reservoirs (21, 22) through feed passages (17, 18) and compensation or dilatation passages (23, 24, 27) opening into the bore (2), characterized in that the pistons (3, 4) possess smooth lateral surfaces cooperating in a sliding and sealed manner with respective pairs of resilient sealing members (25, 26) disposed in annular grooves of the lateral wall of the bore (2), and in that, at least in one of two end positions of the pistons (3, 4), the orifice (30) communicating the primary pressure chamber with the primary brake circuit is situated opposite the lateral surface of one of the pistons and communicates with the primary pressure chamber (15) via longitudinal grooves (32) formed in the lateral surface of the bore (2).

2. The master cylinder of claim 1, characterized in that at least one of the feed passages (17; 18) is covered by the lateral surface of the corresponding piston (2, 4), the associated compensation or dilatation passage (23, 24, 27) comprising axial portions of said longitudinal grooves (32) communicating with the feed passage (17).

3. The master cylinder of claim 2, characterized in that the front extremity of the piston (2, 4) delimiting the corresponding pressure chamber (15, 16) comprises peripheral grooves or chamfers (27), the compensation or dilatation portions of the longitudinal grooves (32) being limited towards this pressure chamber by a sealing member of said pair or resilient sealing members (25, 26) cooperating with said piston, the interior face of said sealing member being situated at the vertical of said grooves or chamfers (27) when the piston is in its rest position.

## FIG_1

## FIG_2